# EUROPÄISCHE PATENTANMELDUNG

(11) **EP 0 997 617 A1**
(43) Veröffentlichungstag der Anmeldung: **03.05.2000**
(21) Anmeldenummer: 98119968.0
(22) Anmeldetag: 28.10.1998
(51) Int. Cl.: F01N 3/08, F02D 41/14

(54) **Verfahren zur Regeneration einer Stickoxidfalle im Abgassystem eines Verbrennungsmotors sowie Vorrichtung zur Durchführung des Verfahrens**

(71) Anmelder: Ford Global Technologies, Inc., A subsidiary of Ford Motor Company, Dearborn, Michigan 48126 (US)
(72) Erfinder: Phlips, Patrick, 50858 Köln (DE); Grieser, Klemens, 40764 Langenfeld (DE); Himmelsbach, Johann, 51789 Lindlar (DE); Dickers, Guido, 41068 Mönchengladbach (DE)
(74) Vertreter: Drömer, Hans-Carsten, Dipl.-Ing.

(57) **Zusammenfassung**

Die Erfindung betrifft ein Verfahren zur Regeneration einer Stickoxidfalle im Abgassystem eines Verbrennungsmotors mit Einrichtungen zur Beeinflussung des zugeführten Luftmassenstroms und der eingespritzten Kraftstoffmenge, bei dem zum Zwecke der Einleitung bzw. Beendigung eines bei einem fetten Luft-/Kraftstoffverhältnis durchgeführten Regenerationzyklus die eingespritzte Kraftstoffmenge verändert wird sowie eine Vorrichtung zur Durchführung des Verfahrens. Der dem Motor zugeführte Luftmassenstrom wird während der Regenerationszyklen derart verändert, daß die Drehmomentabgabe des Verbrennungsmotors während des Regenerationszyklus im Vergleich zur Drehmomentabgabe unmittelbar vor bzw. nach dem Regenerationszyklus im wesentlichen unverändert bleibt, ohne den Zündzeitpunkt wesentlich von der wirkungsgradoptimalen Einstellung zu verändern. Die Regenerationszyklen werden erst durchgeführt, wenn die Menge der von der Stickoxidfalle aufgenommenen Stickoxide einen vorgegebenen Schwellwert überschritten hat. Diese Menge wird über Integration einer mittels eines funktionalen Zusammenhangs bestimmten Stickoxidaufnahmerate bestimmt. Der Schwellwert wird an die Alterung des Katalysators und der Stickoxidfalle angepaßt.

## Beschreibung

Die Erfindung betrifft ein Verfahren zur Regeneration einer Stickoxidfalle im Abgassystem eines Verbrennungsmotors mit Einrichtungen zur Beeinflussung des zugeführten Luftmassenstroms und der eingespritzten Kraftstoffmenge, bei dem zum Zwecke der Einleitung bzw. Beendigung eines bei einem fetten Luft-/Kraftstoffverhältnis durchgeführten Regenerationzyklus die eingespritzte Kraftstoffmenge verändert wird sowie eine Vorrichtung zur Durchführung des Verfahrens.

Der Einsatz einer derartigen Stickoxidfalle (NOₓ-Trap) im Verbund mit einem konventionellen Dreiwegekatalysator erfolgt bevorzugt bei Kraftfahrzeugen, deren Verbrennungsmotor für einen Magerbetrieb ausgelegt ist (sog. lean burn engine). Die Stickoxidfalle verringert insbesondere im Magerbetrieb auftretende Stickoxidemissionen, indem Stickoxidmoleküle an der Beschichtung der Falle angelagert und somit aus dem Abgas entfernt werden. Die angelagerten Stickoxide werden unter Einwirkung eines Katalysators zu Stickstoff und Sauerstoff aufgespalten, wobei der Sauerstoff mit überschüssigem Wasserstoff oder CO zu Wasser bzw. CO₂ verbrannt wird. Diese Aufspaltungsreaktionen können jedoch bei den im Mager- oder stöchiometrischem Betrieb des Motors herrschenden Abgasbedingungen nicht bzw. nur in sehr geringem Umfange erfolgen. Stattdessen lagern sich die Stickoxide an der Falle an, bis ein Sättigungsgrad erreicht ist, so daß die Reinigungseffizienz der Stickoxidfalle stark abnimmt.

Deshalb ist es bekannt, die Stickoxidfalle in regelmäßigen Abständen einem Regenerationszyklus zu unterziehen, indem nach Ablauf einer vorgegebenen Zeit mit Betrieb bei mageren oder stöchiometrischen Luft-/Kraftstoffverhältnissen die Aufspaltung der gespeicherten Stickoxide durch kurzzeitige starke Überfettung des Luft-/Kraftstoffgemisches erreicht wird. Beispielsweise kann hierzu vorgesehen sein, den Motor statt mit lambda = 1,6 (Magerbetrieb) alle 60 s für eine Dauer von 0,5 bis 1 s mit lambda = 0,75 (stark überfettet) zu betreiben, wobei lambda das auf das stöchiometrische Verhältnis normierte Luft-/Kraftstoffverhältnis bedeutet.

Diese zur Regeneration erforderliche zyklische Überfettung führt zu einem erhöhten Treibstoffbedarf. Es ist erstrebenswert, den zusätzlichen Kraftstoffverbrauch durch diese Regenerationszyklen zu minimieren und damit die Gesamteffizienz des Stickoxidfallensystems zu verbessern.

Ein weiteres Problem bei bekannten Regenerationsverfahren für Stickoxidfallen liegt darin, daß bei diesen Verfahren die kurzzeitige Überfettung durch Erhöhen der Treibstoffzufuhr erreicht wird. Dies führt zu einer typischerweise um 30% bis 40% stärkeren Drehmomentabgabe des Verbrennungsmotors, die trotz ihrer kurzen Dauer zu einer vom Fahrer bemerkbaren Geschwindigkeitsänderung führen kann. Insbesondere bei niedrigen Geschwindigkeiten (z.B. Schritttempo) sind derartige ruckartige Geschwindigkeitsänderungen nicht akzeptabel. Deshalb wird bisher die erhöhte Drehmomentabgabe durch künstliche Verschlechterung des Motorwirkungsgrades mittels einer Veränderung des Zündwinkels kompensiert. Dies führt jedoch zu einem hohen Kraftstoffverbrauch.

Von Bedeutung für die Dauer eines Regenerationszyklus ist aber nicht nur die in der Stickoxidfalle gespeicherte NOx-Menge. Sowohl der Katalysator als auch die Stickoxidfalle unterliegen einer Alterung. Dies führt dazu, daß die optimale Dauer des Regenerationszyklus bei einem 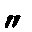 jungen" Fahrzeug anders als bei einem 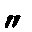 alten" Fahrzeug ist.

Die Aufgabe der vorliegenden Erfindung besteht darin, ein Verfahren der eingangs genannten Art so zu verbessern, daß der durch die Regenerationszyklen entstehende Kraftstoffmehrverbrauch minimiert wird und die Dauer des Regenerationszyklus an die Alterung von Katalysator und Stickoxidfalle adaptiert wird.

Zur Lösung dieser Aufgabe ist erfindungsgemäß vorgesehen, daß bei der zum Zwecke der Einleitung bzw. Beendigung des Regenerationszyklus erforderlichen Änderung der eingespritzten Kraftstoffmenge der dem Motor zugeführte Luftmassenstrom gleichzeitig derart verändert wird, daß die Drehmomentabgabe des Verbrennungsmotors während des Regenerationszyklus im Vergleich zur Drehmomentabgabe unmittelbar vor bzw. nach dem Regenerationszyklus im wesentlichen unverändert bleibt und die Dauer des Regenerationszyklus in Abhängigkeit von der Speicherkapazität der Stickoxidfalle und der Sauerstoffspeicherkapazität des Katalysators verändert wird.

Die Änderung des dem Verbrennungsmotor zugeführten Luftmassenstroms erfolgt mittels der Einrichtung zur Beeinflussung des Luftmassenstroms, z.B. einer elektronisch ansteuerbaren Drosselklappe oder eines zu dem Luftströmungsweg einer konventionellen mechanischen Drosselklappe parallelgeschalteten, elektronisch ansteuerbaren Bypass-Ventils. Während des Regenerationszyklus wird der Luftmassenstrom derart verringert, daß sich trotz der größeren Kraftstoffzufuhr das abgegebene Drehmoment nicht oder zumindest nicht in einem vom Fahrer wahrnehmbaren Maße ändert. Somit ist keine künstliche Wirkungsgradverschlechterung erforderlich; stattdessen kann der Motor auch während der Regeneration mit einem für das Regenerations-Luft-/Kraftstoffverhältnis optimalen Wirkungsgrad betrieben werden.

In vorteilhafter Ausgestaltung der Erfindung kann vorgesehen sein, daß das zur Regeneration der Stickoxidfalle erforderliche Luft-/Kraftstoffverhältnis mittels eines funktionalen Zusammenhangs in Abhängigkeit von der Abgastemperatur im Bereich der Stickoxidfalle und dem Abgasmassenstrom bestimmt wird. Das Regenerations-Luft-/Kraftstoffverhältnis wird so bestimmt, daß eine vollständige Regeneration mit einer möglichst geringen Überfettung erreicht werden kann. Bei höherer Abgastemperatur und größerem Abgasmassenstrom ist die erforderliche Überfettung tendenziell kleiner. Der genannte funktionale Zusammenhang, wie auch die weiteren nachfolgend genannten funktionalen Zusammenhänge, werden zweckmäßigerweise mittels Versuchsreihen gewonnen und in Form einer an die Versuchsergebnisse angepaßten mathematischen Funktion oder mittels eines mehrdimensionalen Tabellenspeichers implementiert. Die Abgastemperatur und der Abgasmassenstrom im Bereich der Stickoxidfalle werden auf bekannte Weise mittels Messungen bzw. Berechnungen (beispielsweise auf der Grundlage der eingespritzten Kraftstoffmenge und des Luftmassenstromes) ermittelt.

Es ist erfindungsgemäß bevorzugt vorgesehen, die Speicherkapazität der Stickoxidfalle und/oder die Sauerstoffspeicherkapazität des Katalysators nach einem Modell zu adaptieren, welches
- Motorbetriebsdauer
- Kilometerleistung des Fahrzeugs (Gesamtkilometer und der Zeitverlauf)
- Katalysatorbetriebsbedingungen
- Stickoxidfalle-Betriebsbedingungen
oder eine beliebige Kmobination hiervon berücksichtigt.

Bei einer im Rahmen der Erfindung zur Lösung der genannten Aufgabenstellung vorgesehenen Vorrichtung zur Regeneration einer Stickoxidfalle im Abgassystem eines Verbrennungsmotors durch einen bei einem fetten Luft-/Kraftstoffverhältnis durchgeführten Regenerationszyklus mit Einrichtungen zur Dosierung des dem Verbrennungsmotor zugeführten Luftmassenstroms und der eingespritzten Kraftstoffmenge und einer elektronischen Steuereinheit zur Steuerung dieser Dosiereinrichtungen in Abhängigkeit von einer Vielzahl von Motorparametern ist vorgesehen, daß die Steuereinheit Einrichtungen zur Initiierung des Regenerationszyklus mit einer Einheit zur näherungsweisen Bestimmung der aktuellen Aufnahmerate von Stickoxiden durch die Stickoxidfalle, mit einer Einrichtung zur Integration dieser Aufnahmerate, einer Vergleichseinrichtung zum Vergleich der integrierten Aufnahmerate mit einem Schwellwert und zum Initiieren des Regenerationszyklus, wenn der Schwellwert überschritten ist und mit einer Einrichtung zum Rücksetzen der integrierten Aufnahmerate nach Beendigung des Regenerationszyklus aufweist.

Zusätzlich ist eine Adaptionseinheit zur Bestimmung von
- Motorbetriebsdauer
- Kilometerleistung des Fahrzeugs
- (Gesamtkilometer und/oder Zeitverlauf)
- Katalysatorbetriebsbedingungen
- Stickoxidfalle-Betriebsbedingungen
oder für eine beliebige Kombination hiervon angeordnet.

Damit wird erreicht, daß ein Regenerationszyklus nur dann initiiert wird, wenn dies auch erforderlich ist und auch die Alterung berücksichtigt werden kann. Bei Lösungen nach dem Stand der Technik wird demgegenüber der Regenerationszyklus in festen Zeitabständen, z.B. alle 60 s, ausgeführt. Da der tatsächliche Füllungsgrad der Stickoxidfalle aber abhängig von den Motorbetriebsbedingungen variiert, kann es bei den bekannten Lösungen entweder zu unnötig häufigen Regenerationen - verbunden mit erhöhtem Kraftstoffverbrauch -oder zu allzu seltenen Regenerationen - verbunden mit einer schlechteren Abgasreinigung - kommen . Demgegenüber wird bei der Erfindung die aktuelle Aufnahmerate der Stickoxidfalle an Stickoxiden näherungsweise bestimmt. Diese Rate wird in festgelegten Zeitabständen ermittelt und aufintegriert. Das Integral ist somit ein Maß für den Füllungsgrad der Stickoxidfalle. Dieses Integral wird mit einem Schwellwert verglichen. Bei Überschreitung des Schwellwerts ist die Falle gesättigt, und es wird dann ein Regenerationszyklus eingeleitet. Zum Abschluß des Regenerationszyklus wird das Integral entsprechend der nunmehr regenerierten Stickoxidfalle auf einen Ursprungswert (z.B. Null) zurückgesetzt. Somit erfolgt eine Regeneration dann und nur dann, wenn diese auch wirklich erforderlich ist.

In vorteilhafter Ausgestaltung der Erfindung kann vorgesehen sein, daß die Einrichtung zur näherungsweisen Bestimmung der aktuellen Aufnahmerate von Stickoxiden zur Bestimmung dieser Aufnahmerate in Abhängigkeit von der aktuellen Drehzahl und dem Drehmoment des Vebrennungsmotors, dem Luft-/Kraftstoffverhälntis, sowie der Abgastemperatur und dem Abgasmassenstrom im Bereich der Stickoxidfalle ausgebildet ist. Die Einrichtung ist also zur Erfassung eines funktionalen Zusammenhangs ausgebildet, der eine näherungsweise Bestimmung der Aufnahmerate aufgrund der genannten Größen erlaubt.

Im Vollastbereich, also bei hohen Fahrzeuggeschwindigkeiten bzw. starken Beschleunigungen können die erforderlichen Motorleistungen nur durch Einstellung eines fetten Luft-/Kraftstoffverhältnisses erreicht werden. In diesem Betriebsbereich erfolgt eine Regeneration der Stickoxidfalle auch ohne einen expliziten Regenerationszyklus, so daß in vorteilhafter Ausgestaltung der Erfindung vorgesehen sein kann, das Integral für den Füllungsgrad der Stickoxidfalle bei Erkennung eines für eine vorherbestimmte Zeitspanne andauernden Vollastbetriebes des Verbrennungsmotors auf den Ursprungswert zurückzusetzen.

Weiterhin kann in vorteilhafter Ausbildung der Erfindung eine Einrichtung zur Bestimmung der Dauer des Regenerationszyklus in Abhängigkeit von der Abgastemperatur und dem Abgasmassenstrom im Bereich der Stickoxidfalle und dem zur Regeneration eingestellten Luft-/Kraftstoffverhältnis vorgesehen sein. Diese Einrichtung ist zur Erkennung eines funktionalen Zusammenhangs zur Bestimmung der Dauer des Regenerationszyklus ausgebildet, wodurch diese - im Gegensatz zu bekannten Lösungen mit festen Regenerationszeiten - abhängig von den individuellen Betriebsparametern minimiert werden kann.

Es ist bevorzugt vorgesehen, daß die Adaptionsvorrichtung für die Bestimmung der Dauer des Regenerationszyklus in Abhängigkeit von Betriebsbedingungen am Katalysator bestimmt wird. Dazu werden bevorzugt die Temperatur, der Temperatur/Zeit-Verlauf und das Kraftstoff/Luft-Verhältnis sowie dessen Zeitverlauf verwendet.

Die Erfindung wird nachfolgend anhand der Abbildungen beispielhaft erläutert.

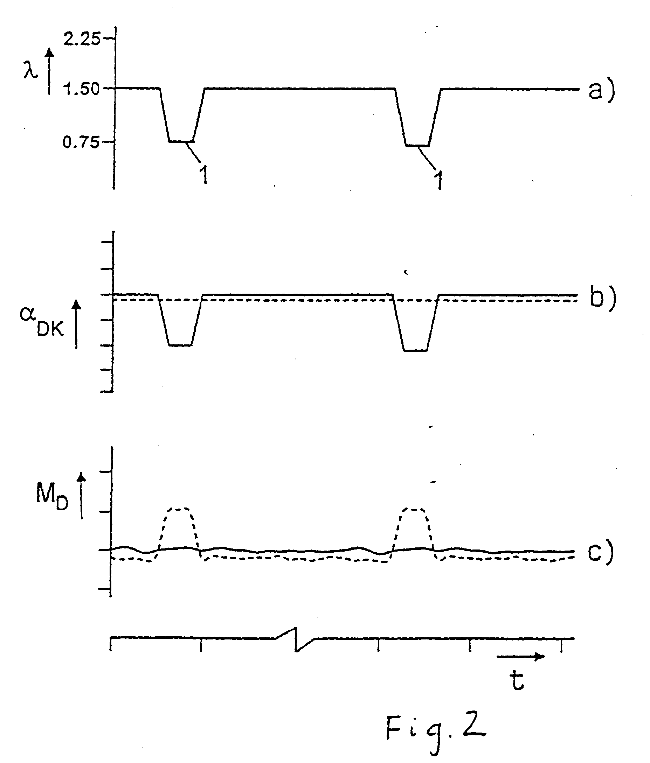

Die Figur 2 zeigt schematisch den Ablauf eines erfindungsgemäßen Regenerationsverfahrens anhand von Diagrammen verschiedener Motorkenngrößen abhängig von der mit t bezeichneten Zeit.

Eine (nicht dargestellte) Vorrichtung zur Durchführung des Verfahrens weist einen Verbrennungsmotor mit einer Stickoxidfalle im Abgassystem auf. Der Verbrennungsmotor erhält Kraftstoff von einer Kraftstoffeinspritzanlage sowie Luft über eine elektronisch steuerbare Drosselklappe. Eine elektronische Motorsteuerung steuert die Einspritzanlage, die Drosselklappe, die Zündanlage etc. und erhält eine Vielzahl von Eingangssignalen, wie z.B. die Motordrehzahl, die Gaspedalstellung, die Abgastemperatur usw.. Aus diesen Eingangssignalen werden in bekannter Weise charakteristische Motorkenngrößen, z.B. das gewünschte Drehmoment, das Luft-/Kraftstoffverhältnis od. dgl. bestimmt.

Der Verbrennungsmotor arbeitet in dem in der Figur dargestellten Beispiel in einem Magerbetrieb mit einem Luft-/Kraftstoffverhältnis von lambda = 1,5 (Diagramm a). Zur Regeneration der Stickoxidfalle sind Regenerationszyklen 1 vorgesehen, in denen ein fettes Luft-/Kraftstoffverhältnis von lambda = 0,75 eingestellt wird. Die Zeiten, nach deren Ablauf Regenerationen erforderlich sind, werden dadurch bestimmt, daß die Motorsteuerung abhängig von der aktuellen Drehzahl und dem Drehmoment des Verbrennungsmotors, dem Luft-/Kraftstoffverhältnis, sowie der Abgastemperatur und dem Abgasmassenstrom im Bereich der Stickoxidfalle mittels eines funktionalen Zusammenhangs die aktuelle Stickoxidaufnahmerate der Stickoxidfalle näherungsweise bestimmt. Diese wird zeitlich aufintegriert. Hat das Integral einen vorgegebenen Schwellwert überschritten, so signalisiert dies, daß die Aufnahmekapazität der Falle erschöpft ist, weshalb dann der Regenerationszyklus gestartet wird. Nach dem Regenerationszyklus wird das Integral auf den Wert Null gesetzt. Befindet sich der Motor für eine vorgegebene Zeit im Vollastbetrieb, wird das Integral ebenfalls auf Null gesetzt. Die Dauer des Regenerationszyklus und das hierzu eingestellte Luft-/Kraftstoffverhältnis werden in Abhängigkeit von der Abgastemperatur im Bereich der Stickoxidfalle und von dem Abgasmassenstrom bestimmt.

Während der Regenerationszyklen (Fig. 2) wird durch die Motorsteuerung mehr Kraftstoff eingespritzt, um ein fetteres Luft-/Kraftstoffverhältnis zu erreichen. Bei konstantem Drosselklappenwinkel ^{Â}DK (gestrichelte Linie in Diagramm b) resultiert daraus ein kurzfristig größeres Motordrehmoment M_{D} (gestrichelte Linie in Diagramm c). Um diese Drehmomentänderungen zu vermeiden, wird erfindungsgemäß der Drosselklappenwinkel und damit der Luftmassenstrom während der Regenerationszyklen derart verringert (durchgezogene Linie in Diagramm b), daß das Drehmoment im wesentlichen konstant bleibt (durchgezogene Linie in Diagramm c).

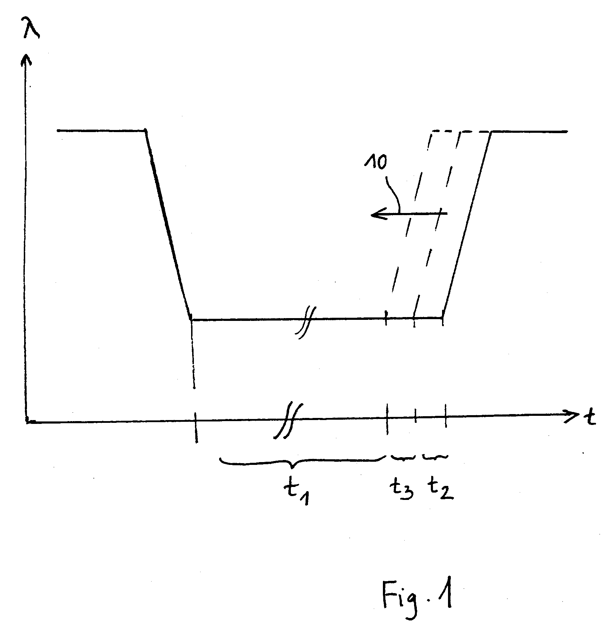

Die Fig. 1 zeigt den Regenerationszyklus detailliert. Er besteht veranschaulicht aus einer Hauptregenerationszeit t2 einer Vorschaltzeit t1 und einer Nachschaltzeit t3. Die Vorschaltzeit wird in Abhängigkeit von der Sauerstoffspeicherkapazität des Katalysators eingestellt. Mit zunehmender Alterung nimmt die Vorschaltzeit t1 ab. Erreicht werden kann dies insbesondere durch Veränderung des Schwellwertes der integral berechneten Stickstoffaufnahme, wodurch sich der gestrichelte Verlauf an der linken Flanke des Regenerationszyklus einstellt. Mit zunehmender Alterung wird diese linke Flanke weiter auf t2 hin verschoben in Richtung des Pfeiles 10. Dann liegt folgender Mechanismus zugrunde. Der Katalysator speichert Sauerstoff. Wenn von Magerbetrieb auf fettes Gemisch umgeschaltet wird, erfolgt zunächst eine Umwandlung in ein stöchiometrisches Abgas. Je nach Speicherkapazität des Katalysators für Sauerstoff steht also für eine entsprechend lange Zeit kein für die Regeneration der Stickoxidfalle geeignetes Gemisch zur Verfügung. Die Stickoxidfalle nimmt mit zunehmendem Alter weniger NOx auf. Daher muß die Regenerationszeit verringert werden. Der Schwellwert ist entsprechend zu varrieren. In der schematischen Darstellung in Fig. 1 wird dies durch eine verkürzte Nachhaltzeit t3 veranschaulicht obwohl nur die Dauer des Anliegens eines angereicherten Abgases beeinflußt werden muß. Insgesamt kommt es also darauf an, die zeitlichen Abstände zwischen aufeinanderfolgenden Regenerationszyklen an die Sauerstoffspeicherkapazität des Katalysators und die Dauer des Regenerationszyklus an die Speicherkapazität der Stickoxidfalle anzupassen.

## Patentansprüche

1. Verfahren zur Regeneration einer Stickoxidfalle im Abgassystem eines Verbrennungsmotors mit Einrichtungen zur Beeinflussung des zugeführten Luftmassenstroms und der eingespritzten Kraftstoffmenge, bei dem zum Zwecke der Einleitung bzw. Beendigung eines bei einem fetten Luft-/Kraftstoffverhältnis durchgeführten Regenerationszyklus die eingespritzte Kraftstoffmenge verändert wird, dadurch gekennzeichnet, daß bei dieser Änderung der eingespritzten Kraftstoffmenge der dem Motor zugeführte Luftmassenstrom gleichzeitig derart verändert wird, daß die Drehmomentabgabe des Verbrennungsmotors während des Regenerationszyklus im Vergleich zur Drehmomentabgabe unmittelbar vor bzw. nach dem Regenerationszyklus im wesentlichen unverändert bleibt und die Dauer des Regenerationszyklus in Abhängigkeit von der Sauerstoffspeicherkapazität des Katalysators und/oder der Speicherkapazität der Stickoxydfalle verändert wird.

2. Verfahren nach Anspruch 1, dadurch gekennzeichnet, daß das zur Regeneration der Stickoxidfalle erforderliche Luft-/Kraftstoffverhältnis mittels eines funktionalen Zusammenhangs in Abhängigkeit von der Abgastemperatur im Bereich der Stickoxidfalle und dem Abgasmassenstrom bestimmt wird.

3. Verfahren nach Anspruch 1 oder 2, dadurch gekennzeichnet, daß die Speicherkapazität der Stickoxidfalle und/oder die Sauerstoffspeicherkapazität des Katalysators nach einem Modell adaptiert wird, welches
- Motorbetriebsdauer
- Kilometerleistung des Fahrzeugs
- Katalysatorbetriebsbedingungen
- Stickoxidfalle-Betriebsbedingungen
oder eine beliebige Kombination hiervon berücksichtigt.

4. Vorrichtung zur Regeneration einer Stickoxidfalle im Abgassystem eines Verbrennungsmotors durch einen bei einem fetten Luft-/Kraftstoffverhältnis durchgeführten Regenerationszyklus, insbesondere nach einem der Ansprüche 1 bis 3, mit Einrichtungen zur Dosierung des dem Verbrennungsmotor zugeführten Luftmassenstroms und der eingespritzten Kraftstoffmenge und einer elektronischen Steuereinheit zur Steuerung dieser Dosiereinrichtungen in Abhängigkeit von einer Vielzahl von Motorparametern, dadurch gekennzeichnet, daß die Steuereinheit Einrichtungen zur Initiierung des Regenerationszyklus mit einer Einheit zur näherungsweisen Bestimmung der aktuellen Aufnahmerate von Stickoxiden durch die Stickoxidfalle, einer Einrichtung zur Integration dieser Aufnahmerate, einer Vergleichseinrichtung zum Vergleich der integrierten Aufnahmerate mit einem Schwellwert und zum Initiieren des Regenerationszyklus, wenn der Schwellwert überschritten ist, und einer Einrichtung zum Rücksetzen der integrierten Aufnahmerate nach Beendigung des Regenerationszyklus aufweist und daß eine Adaptionseinheit zur Bestimmung von
- Motorbetriebsdauer
- Kilometerleistung des Fahrzeugs
- Katalysatorbetriebsbedingungen
- Stickoxidfalle-Betriebsbedingungen
oder für eine beliebige Kombination hiervon angeordnet ist.

5. Vorrichtung nach Anspruch 4, dadurch gekennzeichnet, daß die Einrichtung zur näherungsweisen Bestimmung der aktuellen Aufnahmerate von Stickoxiden zur Bestimmung dieser Aufnahmerate in Abhängigkeit von der aktuellen Drehzahl und von dem Drehmoment des Verbrennungsmotors, dem Luft-/Kraftstoffverhältnis sowie von der Abgastemperatur und dem Abgasmassenstrom im Bereich der Stickoxidfalle ausgebildet ist.

6. Vorrichtung nach Anspruch 4 oder 5, gekennzeichnet durch eine Einrichtung zum Rücksetzen der integrierten Aufnahmerate auf einen Ursprungswert bei Erkennung eines für eine vorherbestimmte Zeitspanne andauernden Vollastbetriebes des Verbrennungsmotors und daß die aktuelle Aufnahmerate oder die integrierte Aufnahmerate oder der Ursprungswert mit einem von der Adaptionseinheit bestimmten wert gerichtet ist.

7. Vorrichtung nach einem der Ansprüche 4 bis 6 gekennzeichnet durch eine Einrichtung zur Bestimmung der Dauer des Regenerationszyklus in Abhängigkeit von der Abgastemperatur und dem Abgasmassenstrom im Bereich der Stickoxidfalle und dem zur Regeneration eingestellten Luft-/Kraftstoffverhältnis.

8. Vorrichtung nach einem der Ansprüche 4 bis 7, gekennzeichnet durch eine Adaptionseinrichtung für die Bestimmung der Dauer eines Regenerationszyklus in Abhängigkeit von Betriebsbedingungen am Katalysator, wobei insbesondere die Temperatur, der Zeitverlauf der Temperatur und das Luft/Kraftstoffverhälntnis sowie dessen Zeitverlauf bestimmt werden.
